Europäisches Patentamt

European Patent Office

Office européen des brevets

(11) Veröffentlichungsnummer : **0 457 868 B1**

(12) **EUROPÄISCHE PATENTSCHRIFT**

(45) Veröffentlichungstag der Patentschrift :
27.10.93 Patentblatt 93/43

(21) Anmeldenummer : 90917588.7

(22) Anmeldetag : 30.11.90

(86) Internationale Anmeldenummer :
PCT/EP90/02061

(87) Internationale Veröffentlichungsnummer :
WO 91/09276 27.06.91 Gazette 91/14

(51) Int. Cl.⁵ : **G01D 5/16,** G01L 1/22,
G01R 27/08

(54) **ANORDNUNG ZUR VERARBEITUNG VON SENSORSIGNALEN.**

(30) Priorität : 07.12.89 DE 3940537

(43) Veröffentlichungstag der Anmeldung :
27.11.91 Patentblatt 91/48

(45) Bekanntmachung des Hinweises auf die
Patenterteilung :
27.10.93 Patentblatt 93/43

(84) Benannte Vertragsstaaten :
BE CH DE DK ES FR GB IT LI NL SE

(56) Entgegenhaltungen :
EP-A- 0 007 288
EP-A- 0 105 120
EP-A- 0 216 288
DE-C- 3 633 791

(73) Patentinhaber : **Endress u. Hauser GmbH u.Co.
Hauptstrasse 1
D-79689 Maulburg (DE)**

(72) Erfinder : **SCHNEIDER, Georg
Talstrasse 55
D-7860 Schopfheim-Langenau (DE)**
Erfinder : **WAGNER, Richard
Hans-Thoma-Strasse 9
D-7864 Maulburg (DE)**

(74) Vertreter : **Morstadt, Volker, Dipl.-Ing. et al
c/o Endress + Hauser Flowtec AG
Kägenstrasse 7 Postfach 435
CH-4153 Reinach BL 1 (CH)**

EP 0 457 868 B1

**Beschreibung**

In der DE-A-3633791 ist eine Anordnung zur Verarbeitung von Sensorsignalen beschrieben, die von einem Widerstandssensor geliefert werden, der bei Speisung mit einem Versorgungssignal als Reaktion auf die Einwirkung einer physikalischen Messgrösse einen die Abhängigkeit des elektrischen Widerstands von der Messgrösse darstellenden Messeffekt erzeugt, mit einer nach dem Prinzip des quantisierten Ladungstransports mittels Schalter-Kondensator-Strukturen arbeitenden Signalverarbeitungsschaltung, die eine Ladungsbalance durch gegensinnige Integration von vom Nesseffekt abhängigen Messladungspaketen und von vom Messeffekt unabhängigen Kompensationsladungspaketen herstellt.

Bei dieser Anordnung ist der Widerstandssensor eine Halbbrücke mit gegensinnig veränderlichen Widerständen. Dabei werden die vom Messeffekt abhängigen Messladungspakete integriert, bis die integrierte Ladung einen vorbestimmten Schwellenwert übersteigt, worauf durch Integration eines vom Messeffekt unabhängigen Kompensationsladungspakets entgegengesetzten Vorzeichens wieder der Anfangszustand hergestellt wird. Auf diese Weise stellt sich im Integrator eine Ladungsbalance ein, bei welcher das Verhältnis der Anzahl der in einem vorgegebenen Zeitintervall integrierten Kompensationsladungspakete zu der Anzahl der im gleichen Zeitintervall integrierten Messladungspakete den Messwert anzeigt. Das Messergebnis liegt somit in digitaler Form vor, und deshalb liefern die obigen vorbeschriebenen Signalverarbeitungsschaltungen digitale Ausgangssignale.

Auch die Anordnungen nach der EP-A 0 007 288 und der EP-A 0 105 120 liefern digitale Ausgangssignale, ohne allerdings mit quantisiertem Ladungstransport zu arbeiten und mit Schalter-Kondensator-Strukturen ausgerüstet zu sein.

Die Umwandlung von Sensorsignalen in analoge Ausgangssignale mittels Verstärkern ist an sich schließlich in der EP-A 0 216 288 beschrieben.

Der in Anspruch 1 definierten Erfindung liegt die Aufgabe zugrunde, die Anordnung nach der DE-A 36 33 791 so zu modifizieren, daß deren Signalverarbeitungsschaltung unmittelbar ein den Messwert anzeigendes analoges Ausgangssignal liefert.

Da bei der Anordnung nach der Erfindung die Speisung des Sensors über das Rückkopplungssignal vom Ausgangssignal abhängig ist, ist auch die Grösse der integrierten Ladungspakete vom Ausgangssignal abhängig. Durch die Rückkopplung wird die Grösse der Ladungspakete so beeinflusst, dass sich die Ladungsbalance einstellt. Während das Verhältnis der Anzahl der Kompensationsladungspakete zur Anzahl der Messladungspakete konstant bleibt, ist das dem Integrationsergebnis entsprechende Analogsignal unmittelbar dem Messeffekt proportional. Die Signalverarbeitungsschaltung liefert somit das Messergebnis in Form eines analogen Ausgangssignals.

Vorteilhafte Ausgestaltungen und Weiterbildungen der Erfindung sind in den abhängigen Ansprüchen gekennzeichnet.

Die Erfindung wird anhand der folgenden Beschreibung von Ausführungsbeispielen, die in den Zeichnungen dargestellt sind, näher erläutert.

Fig. 1    zeigt ein Prinzipschema zur Erläuterung des der Erfindung zugrundeliegenden Problems,

Fig. 2    zeigt eine schematische Darstellung eines Widerstandssensors mit Messstreifen im unbelasteten Zustand,

Fig. 3    zeigt den Widerstandssensor von Fig. 2 im belasteten Zustand,

Fig. 4    zeigt das Schaltbild einer mit quantisiertem Ladungstransport und Ladungsbalance mittels Schalter-Kondensator-Strukturen arbeitenden Signalverarbeitungsschaltung für die Verarbeitung des von einer Widerstands-Halbbrücke gelieferten Sensorsignals,

Fig. 5    zeigt Zeitdiagramme, die in der Signalverarbeitungsschaltung von Fig. 4 vorkommen, und

Fig. 6    zeigt eine schematische Darstellung einer abgeänderten Ausführungsform der Signalverarbeitungsschaltungen von Fig. 4 zur Lieferung eines analogen Ausgangsstroms.

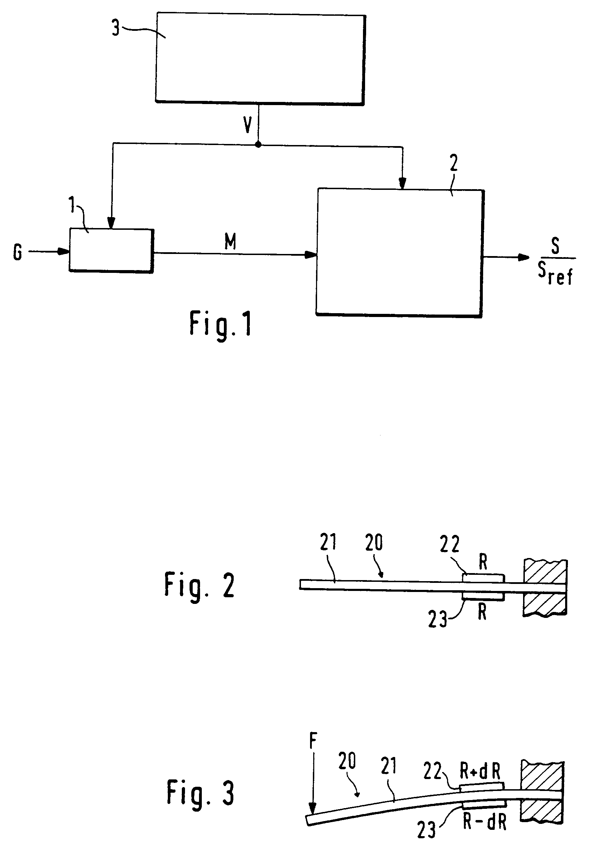

Zum besseren Verständnis ist in Fig. 1 das Prinzip der Verarbeitung von Sensorsignalen dargestellt, auf dem die Erfindung beruht. Fig. 1 zeigt einen Widerstandssensor 1, mit dem eine physikalische Grösse G, z.B. eine Kraft, gemessen werden soll, und eine mit dem Widerstandssensor 1 verbundene Signalverarbeitungsschaltung 2. Der Widerstand des Sensors 1 ist seine elektrische Kenngrösse, die in Abhängigkeit von der zu messenden physikalischen Grösse veränderlich ist. Eine Versorgungssignalquelle 3 liefert an den Widerstandssensor 1 ein Versorgungssignal V, das es ermöglicht, die Aenderung der elektrischen Kenngrösse in ein elektrisches Sensorsignal umzuwandeln, das der Signalverarbeitungsschaltung 2 zugeführt wird und das den Messeffekt M ausdrückt, der den Zusammenhang der zu messenden physikalischen Grösse G und der elektrischen Kenngrösse darstellt. Die Signalverarbeitungsschaltung 2 wandelt das Sensorsignal in ein Ausgangssignal S einer gewünschten Form um, das vorzugsweise auf ein Referenzsignal $S_{ref}$ bezogen ist. Je nach der Ausbildung der Signalverarbeitungsschaltung 2 kann das Ausgangssignal S beispielsweise ein Analogsignal, ein digitales Signal oder eine Frequenz sein.

Wenn die zu messende physikalische Grösse G eine Kraft ist, kann für den Widerstandssensor 1 ein Kraftsensor verwendet werden, wie er in Fig. 2 und 3 dargestellt ist. Der Kraftsensor 20 weist einen elastischen Träger 21 auf, der an einem Ende fest eingespannt ist und durch eine auf sein freies Ende einwirkende Kraft F verformbar ist. Auf zwei entgegengesetzten Seiten des Trägers 21 sind zwei Dehnmessstreifen 22 und 23 so befestigt, dass sie bei einer Verformung des Trägers 21 gegensinnig verformt werden. Beispielsweise ist bei der in Fig. 3 dargestellten Verformung des Trägers 21 der Dehnmessstreifen 22 gedehnt und der Dehnmessstreifen 23 verkürzt. Bekanntlich hängt bei Dehnmessstreifen der ohmsche Widerstand von der Längenänderung ab. Im unverformten Zustand (Fig. 2) haben die beiden Dehnmessstreifen 22 und 23 den gleichen ohmschen Widerstand R. Bei der in Fig. 3 dargestellten gegensinnigen Verformung hat der Dehnmessstreifen 22 den ohmschen Widerstand R + dR und der Dehnmessstreifen 23 den ohmschen Widerstand R - dR. Der Kraftsensor 20 nach den Fig. 2 und 3 ist somit ein Beispiel für einen Widerstandssensor, bei dem die elektrische Kenngrösse, die von der zu messenden physikalischen Grösse abhängt, ein Widerstand ist. Der Messeffekt M, der zur Messung der Kraft F verwendet wird, ist vorzugsweise das Widerstandsverhältnis dR/R. Zur Gewinnung eines diesem Widerstandsverhältnis proportionalen Sensorsignals sind die beiden gegensinnig verformbaren Dehnmessstreifen 22, 23 elektrisch zu einer Widerstands-Halbbrücke verbunden. Es können auch zwei Paare von gegensinnig verformbaren Dehnmessstreifen vorhanden sein, die zu einer Widerstands-Vollbrücke zusammengeschaltet sind.

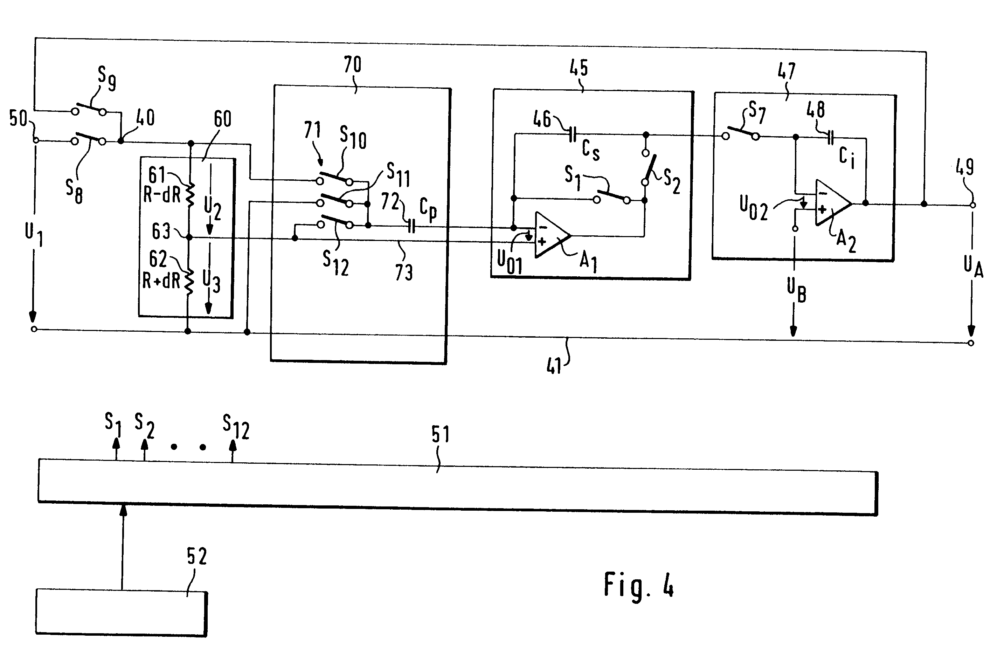

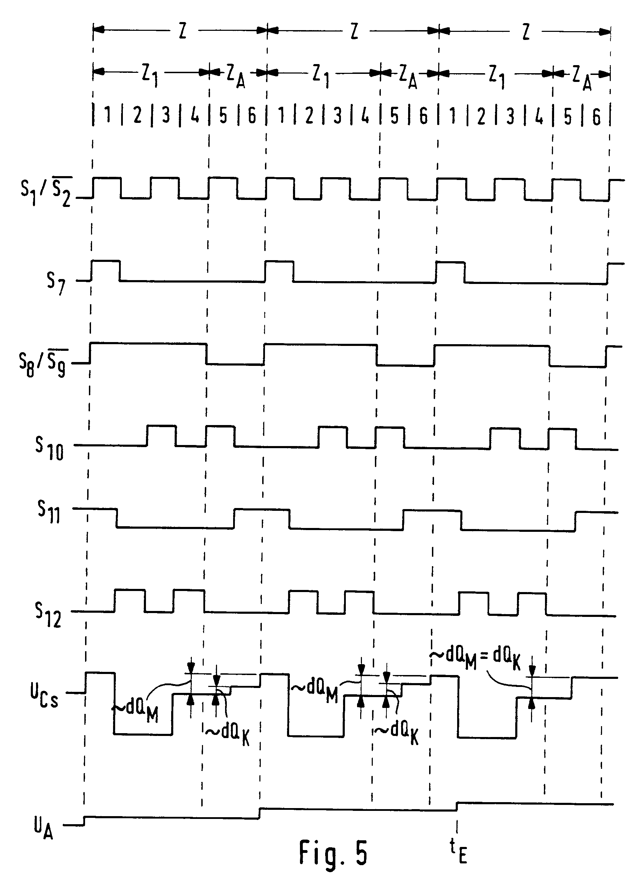

Fig. 4 zeigt ein Ausführungsbeispiel der Signalverarbeitungsschaltung 2 von Fig. 1 für die Signalaufbereitung des von einer Widerstandshalbbrücke 60 gelieferten Sensorsignals, und Fig. 5 zeigt den zeitlichen Verlauf der zugehörigen Schaltersteuersignale und Spannungen. Die Widerstands-Halbbrücke 60 enthält zwei Widerstände 61, 62, die in Reihe zwischen einer Klemme 40 und einem Bezugsleiter 41 angeschlossen sind und deren Verbindungspunkt einen Abgriff 63 bildet. Die Widerstandswerte der Widerstände 61 und 62 unterscheiden sich um gleiche Beträge dR, aber mit entgegengesetzten Vorzeichen, von einem gleichen Grundwert R. Als Beispiel ist angegeben, dass der Widerstand 61 den Wert R - dR und der Widerstand 62 den Wert R + dR hat. Die Widerstands-Halbbrücke 60 kann also beispielsweise durch den Kraftsensor 20 nach den Fig. 2 und 3 gebildet sein, wobei die Widerstände 61, 62 die Widerstandswerte der Dehnmessstreifen 23 bzw. 22 darstellen. Dabei ist R der Widerstandswert der unverformten Dehnmessstreifen, und dR ist die durch die Verformung der Dehnmessstreifen bewirkte Widerstandsänderung. Das Widerstandsverhältnis dR/R stellt den interessierenden Messeffekt M dar, der im Fall des Kraftsensors 20 der Fig. 2 und 3 den Zusammenhang zwischen der zu messenden Kraft F und der Widerstandsänderung der Dehnmessstreifen angibt.

Zum besseren Verständnis der Funktionsabläufe ist der Sensor 60 in Fig. 4 zwischen zwei Schaltungsblöcke der Signalverarbeitungsschaltung eingefügt, doch ist er in Wirklichkeit von der Signalverarbeitungsschaltung, die als integrierte Schaltung ausgeführt sein kann, räumlich getrennt und mit dieser über abgeschirmte Leitungen verbunden. Die Signalverarbeitungsschaltung arbeitet nach dem Prinzip der Ladungsbalance mit Schalter-Kondensator-Kombinationen. Während jedoch solche Signalverarbeitungsschaltungen üblicherweise das analoge Sensorsignal in ein digitales Ausgangssignal umsetzen, das den Messwert darstellt, ist die signalverarbeitungsschaltung von Fig. 4 in besonderer Weise so ausgebildet, dass sie ein analoges Ausgangssignal liefert.

Der Sensor 60 ist einerseits mit einem Funktionsblock 70 andererseits mit einem Zwischenspeicher 45 verbunden. Der Funktionsblock 70 enthält eine Schaltergruppe 71, einen Kondensator 72 mit der Kapazität $C_p$ und einen durchgehenden Verbindungsleiter 73, der den Abgriff 63 der Widerstands-Halbbrücke 60 dauernd mit dem nichtinvertierenden Eingang eines Operationsverstärkers $A_1$ im Zwischenspeicher 45 verbindet. Die Schaltergruppe 71 enthält drei Schalter $S_{10}$, $S_{11}$ und $S_{12}$. Die eine Elektrode des Kondensators 72 ist dauernd mit dem invertierenden Eingang des Operationsverstärkers $A_1$ verbunden. Die andere Elektrode des Kondensators 72 wird durch den Schalter $S_{10}$ mit der Klemme 40, durch den Schalter $S_{11}$ mit dem Bezugsleiter 41 und durch den Schalter $S_{12}$ mit dem Verbindungsleiter 73 verbunden.

Die Widerstands-Halbbrücke 60 bildet einen Spannungsteiler, an dem bei geschlossenem Schalter $S_8$ eine Versorgungsspannung $U_1$ und bei geschlossenem Schalter $S_9$ die Ausgangsspannung $U_A$ (s. unten) liegt. Die zwischen der Klemme 40 und dem Abgriff 63 am Widerstand 61 bestehende Spannung ist mit $U_2$ und die zwischen dem Abgriff 63 und dem Bezugsleiter 41 am Widerstand 62 bestehende Spannung ist mit $U_3$ bezeichnet.

Der Zwischenspeicher 45 enthält den Operationsverstärker $A_1$, einen Speicherkondensator 46 der Kapazität $C_s$ und zwei Schalter $S_1$ und $S_2$. Wenn der Schalter $S_1$ geschlossen ist, verbindet er den Ausgang des Operationsverstärkers $A_1$ mit dessen invertierendem Eingang. Wenn der Schalter $S_2$ geschlossen ist, verbindet er den Ausgang des Operationsverstärkers $A_1$ mit der einen Elektrode des Speicherkondensators 46, dessen andere Elektrode mit dem invertierenden Eingang des Operationsverstärkers $A_1$ verbunden ist, so dass dann der Speicherkondensator 46 im Rückkopplungskreis des Operationsverstärkers $A_1$ liegt. Der nichtinvertierende Eingang des Operationsverstärkers $A_1$ liegt, wie bereits erwähnt, am Abgriff 63. Das Potential am invertierenden Eingang unterscheidet sich um die Offsetspannung $U_{01}$ des Operationsverstärkers $A_1$ vom Potential des nichtinvertierenden Eingangs.

Dem Zwischenspeicher 45 ist ein Integrator 47 nachgeschaltet. Dieser enthält einen Operationsverstärker $A_2$, einen in dessen Rückkopplungskreis liegenden Integrationskondensator 48 der Kapazität $C_i$ und einen Schalter $S_7$. Wenn dieser geschlossen ist, verbindet er den invertierenden Eingang des Operationsverstärkers $A_2$ mit dem Speicherkondensator 46 im Zwischenspeicher 45. Der nichtinvertierende Eingang des Operationsverstärkers $A_2$ ist an ein festes Potential gelegt, das sich um eine Spannung $U_B$ vom Potential des Bezugsleiters 41 unterscheidet. Das Potential am invertierenden Eingang des Operationsverstärkers $A_2$ unterscheidet sich um dessen Offsetspannung $U_{02}$ von dem festen Potential des nichtinvertierenden Eingangs. Der Ausgang des Operationsverstärkers $A_2$ ist mit der Ausgangsklemme 49 der Signalverarbeitungsschaltung verbunden. Zwischen der Ausgangsklemme 49 und dem Bezugsleiter 41 erscheint die Ausgangsspannung $U_A$.

Ein Schalter $S_8$ verbindet, wenn er geschlossen ist, die Klemme 40 mit einer Eingangsklemme 50, und ein Schalter $S_9$ verbindet, wenn er geschlossen ist, die Klemme 40 mit der Ausgangsklemme 49. Zwischen der Eingangsklemme 50 und dem Bezugsleiter 41 ist im Betrieb der Schaltung die Versorgungsspannung $U_1$ angelegt, die dem Versorgungssignal V von Fig. 1 entspricht.

Die Schalter $S_1$, $S_2$ und $S_7$ bis $S_{12}$ werden durch Steuersignale betätigt, die von einer Steuerschaltung 51 geliefert werden, die durch ein von einem Taktgeber 52 erzeugtes Taktsignal synchronisiert wird. Zur Vereinfachung sind die Steuersignale mit den gleichen Bezugszeichen $S_1$, $S_2$, $S_7$ ... $S_{12}$ wie die von ihnen gesteuerten Schalter bezeichnet. Der zeitliche Verlauf der Steuersignale ist in den Diagrammen von Fig. 5 dargestellt.

Jeder Schalter $S_1$, $S_2$ ... ist offen, wenn das ihn steuernde Signal einen niedrigen Signalwert hat, und ist geschlossen, wenn das ihn steuernde Signal einen hohen Signalwert hat. Die Schalter $S_1$, $S_2$ sind symbolisch als mechanische Schalterkontakte dargestellt, doch sind sie in Wirklichkeit natürlich durch schnelle elektronische Schalter, beispielsweise Feldeffekttransistoren, gebildet.

Die Funktionsweise der Signalverarbeitungsschaltung von Fig. 4 soll nun anhand der Diagramme von Fig. 5 erläutert werden. Die Diagramme von Fig. 5 zeigen ausser dem bereits erwähnten zeitlichen Verlauf der Steuersignale $S_1$ ... $S_{12}$ auch den zeitlichen Verlauf der Spannung $U_{Cs}$ am Speicherkondensator 46 und der Ausgangsspannung $U_A$ im Verlauf von mehreren aufeinanderfolgenden Zyklen Z. Jeder Zyklus Z ist in sechs Phasen unterteilt, die mit 1 bis 6 beziffert sind.

Die Schalter $S_1$, $S_2$ werden durch ein periodisches Rechtecksignal im Gegentakt gesteuert, so dass der Schalter $S_1$ offen ist, wenn der Schalter $S_2$ geschlossen ist, und umgekehrt. Die Schalter $S_1$, $S_2$ nehmen ihre abwechselnden Zustände jeweils für die Dauer einer der Phasen 1 bis 6 ein. Wenn der Schalter $S_1$ geschlossen und der Schalter $S_2$ offen ist, was jeweils in den Phasen 1, 3 und 5 jedes Zyklus Z der Fall ist, kann der im Eingangskreis des Operationsverstärkers $A_1$ liegende Kondensator 72 durch einen der Schalter $S_{10}$ bis $S_{12}$ an eine der Spannungen $U_2$, $U_3$ bzw. $U_{01}$ gelegt und entsprechend aufgeladen werden, ohne dass dadurch die Ladung im Speicherkondensator 46 beeinflusst wird. Die Schaltung befindet sich dann in einer Konditionierphase für die Konditionierung des Kondensators 72. Wenn dagegen der Schalter $S_1$ offen und der Schalter $S_2$ geschlossen ist, ist der Zwischenspeicher 45 für die Uebernahme von Ladung vom Kondensator 72 auf den Speicherkondensator 46 bereit.

Die Schalter $S_8$, $S_9$ werden ebenfalls durch ein periodisches Rechtecksignal im Gegentakt gesteuert, so dass der Schalter $S_8$ offen ist, wenn der Schalter $S_9$ geschlossen ist, und umgekehrt. Während der Phasen 1 bis 4 jedes Zyklus Z ist der Schalter $S_8$ geschlossen und der Schalter $S_9$ offen. Die Phasen 1 bis 4 jedes Zyklus Z bilden somit einen Teilzyklus $Z_1$, in welchem die Spannung $U_1$ an der Widerstands-Halbbrücke 60 liegt. Dagegen ist in den Phasen 5 und 6 der Schalter $S_9$ geschlossen und der Schalter $S_8$ offen. Die Phasen 5 und 6 bilden somit einen Teilzyklus $Z_A$, in welchem die Spannung $U_A$ an der Widerstands-Halbbrücke 60 liegt.

In jedem Teilzyklus $Z_1$, in dem die Spannung $U_1$ an die Widerstands-Halbbrücke 60 gelegt ist, haben die Spannungen $U_2$, $U_3$ die folgenden Werte:

$$U_{2(1-4)} = U_1(R - dR)/[(R - dR + R + dR)] = U_1(R - dR)/2R \quad (1)$$
$$U_{3(1-4)} = U_1(R + dR)/[(R - dR + R + dR)] = U_1(R + dR)/2R \quad (2)$$

In jedem Teilzyklus $Z_A$, in dem die Spannung $U_A$ an die Widerstands-Halbbrücke 60 gelegt ist, haben die Spannungen $U_2$, $U_3$ die Werte:

$$U_{2(5,6)} = U_A(R - dR)/[(R - dR + R + dR)] = U_A(R - dR)/2R \quad (3)$$
$$U_{3(5,6)} = U_A(R + dR)/[(R - dR + R + dR)] = U_A(R + dR)/2R \quad (4)$$

Die Signalverarbeitungsschaltung von Fig. 4 arbeitet nach dem Prinzip der Ladungsbalance, die im Speicherkondensator 46 stattfindet. Der Funktionsblock 70 liefert diskrete Ladungspakete, die auf den Speicherkondensator 46 übertragen werden. Diese Ladungspakete werden dadurch erzeugt, dass der Kondensator 72 mittels der Schalter $S_{10}$, $S_{11}$, $S_{12}$ wechselweise durch die verschiedenen Spannungen $U_2$, $U_3$, $U_{01}$ auf- und umgeladen wird. Die im Speicherkondensator 46 gespeicherten und summierten Ladungspakete werden durch Schliessen des Schalters $S_7$ auf den Integrationskondensator 48 übertragen. Mit dem in Fig. 5 dargestellten zeitlichen Verlauf der verschiedenen Schaltersteuersignale ergibt sich der folgende Zeitablauf des Betriebs der Signalverarbeitungsschaltung von Fig. 4:

Phase 1:

Am Beginn der Phase 1 jedes Zyklus Z befindet sich auf dem Speicherkondensator 46 noch die im vorhergehenden Zyklus aufgebrachte Ladung. Für die Dauer der Phase 1 ist der Schalter $S_1$ geschlossen und der Schalter $S_2$ ist offen, so dass der Speicherkondensator 46 vom Ausgang des Operationsverstärkers $A_1$ abgetrennt ist. Der Schalter $S_7$ ist für die Dauer der Phase 1 geschlossen, so dass eine Ladungsübertragung vom Speicherkondensator 46 auf den Integrationskondensator 48 stattfindet. Dadurch wird der Speicherkondensator 46 auf die Restladung

$$Q_{Cs(R)} = (U_{02} + U_B - U_{01} - U_3) \cdot C_s \quad (5)$$

entladen, wobei die Umlademenge auf den Integrationskondensator 48 fliesst.

Ferner befindet sich die Schaltung für die Dauer der Phase 1 in der Konditionierphase für den Kondensator 72, da der Schalter $S_1$ geschlossen und der Schalter $S_2$ offen ist. Da zugleich der Schalter $S_{11}$ geschlossen ist, ist der Kondensator 72 mit dem Bezugsleiter 41 verbunden, so dass auf die Ladung

$$Q_{Cp(1)} = (U_{01} + U_{3(1-4)}) \cdot C_p \quad (6)$$

aufgeladen wird, ohne dass die Ladung des Speicherkondensators 46 von diesem Aufladevorgang beeinflusst wird.

Phase 2:

In der Phase 2 jedes Zyklus Z ist der Schalter $S_1$ offen und der Schalter $S_2$ geschlossen, so dass der Zwischenspeicher 45 bereit ist, Ladung auf den Speicherkondensator 46 zu übernehmen. Zugleich ist der Schalter $S_{12}$ geschlossen, so dass der Kondensator 72 über den Verbindungsleiter 73 mit dem nichtinvertierenden Eingang des Operationsverstärkers $A_1$ verbunden ist. Dadurch liegt am Kondensator 72 nur die Offsetspannung $U_{01}$, durch die er auf die Ladung

$$Q_{Cp(2)} = U_{01} \cdot C_p \quad (7)$$

umgeladen wird. Die Umlademenge

$$dQ_{Cp(1,2)} = Q_{Cp(2)} - Q_{Cp(1)} = -U_{3(1-4)} \cdot C_p \quad (8)$$

fliesst auf den Speicherkondensator 46 und verursacht eine negative Aenderung der Spannung $U_{Cs}$, wie aus dem zugehörigen Diagramm von Fig. 5 ersichtlich ist.

Phase 3:

In der Phase 3 ist wieder der Schalter $S_1$ geschlossen und der Schalter $S_2$ offen, so dass sich die Schaltung in der Konditionierphase für den Kondensator 72 befindet. Jedoch bleibt der Schalter $S_7$ offen, so dass keine Ladungsübertragung vom Speicherkondensator 46 auf den Integrationskondensator 48 stattfindet und der Speicherkondensator seine Ladung beibehält. Ferner ist nunmehr der Schalter $S_{10}$ geschlossen, so dass der Kondensator 72 mit der Klemme 40 verbunden ist und somit auf die Ladung

$$Q_{Cp(3)} (U_{01} - U_{2(1-4)}) \cdot C_p \quad (9)$$

Phase 4:

In der Phase 4 ist der Schalter $S_1$ offen und der Schalter $S_2$ geschlossen, so dass der Zwischenspeicher 45 zur Uebernahme von Ladung bereit ist. Zugleich ist wieder der Schalter $S_{12}$ geschlossen, so dass der Kondensator 72 über den Verbindungsleiter 73 mit dem nichtinvertierenden Eingang des Operationsverstärkers $A_1$ verbunden ist und durch die Offsetspannung $U_{01}$ auf die Ladung

$$Q_{Cp(4)} = U_{01} \cdot C_p \quad (10)$$

umgeladen wird. Die Umlademenge

$$dQ_{Cp(3,4)} = Q_{Cp(4)} - Q_{Cp(3)} = U_{2(1-4)} \cdot C_p \quad (11)$$

fliesst auf den Speicherkondensator 46 und verursacht eine positive Aenderung der Spannung $U_{Cs}$, wie aus dem zugehörigen Diagramm von Fig. 5 ersichtlich ist. Diese positive Spannungsänderung ist jedoch kleiner als die zuvor in der Phase 2 verursachte negative Spannungsänderung, da die Spannung $U_{2(1-4)}$ kleiner als die Spannung $U_{3(1-4)}$ ist.

In den Phasen 1 bis 4 ist somit insgesamt ein Messladungspaket

$$dQ_M = dQ_{Cp(1,2)} + dQ_{CP(3,4)} = U_{2(1-4)} \cdot C_p - U_{3(1-4)} \cdot C_p \quad (12)$$

auf den Speicherkondensator 46 übertragen worden. Setzt man für $U_{2(1-4)}$ und $U_{3(1-4)}$ die Werte aus den Glei-

EP 0 457 868 B1

chungen (1) und (2) ein, so erhält man

$$dQ_M = U_1 \cdot C_p (R - dR)/2R - U_1 \cdot C_p (R + dR)/2R = - U_1 \cdot C_p \cdot dR/R \quad (13)$$

Der Unterschied zwischen den in den Phasen 2 und 4 verursachten Aenderungen der Spannung $U_{Cs}$ ist diesem Messladungspaket $dQ_M$ proportional, wie in dem zugehörigen Diagramm von Fig. 5 angezeigt ist.

### Phase 5:

Die Phase 5 ist wieder eine Konditionierphase für den Kondensator 72. Da der Schalter $S_{10}$ geschlossen ist, wird der Kondensator 72 auf die Ladung

$$Q_{Cp(5)} = (U_{01} - U_{2(5,6)}) \cdot C_p \quad (14)$$

aufgeladen.

### Phase 6:

In der Phase 6 ist der Schalter $S_{11}$ geschlossen, so dass der Kondensator 72 mit dem Bezugsleiter 41 verbunden ist und auf die Ladung

$$Q_{Cp(6)} = (U_{01} + U_{3(5,6)}) \cdot C_p \quad (15)$$

umgeladen wird. Die Umlademenge wird als Kompensationsladungspaket

$$dQ_K = Q_{Cp(6)} - Q_{Cp(5)} = U_{2(5,6)} \cdot C_p + U_{3(5,6)} \cdot C_p \quad (16)$$

auf den Speicherkondensator 46 übertragen. Setzt man für $U_{2(5,6)}$ und $U_{3(5,6)}$ die Werte aus den Gleichungen (3) und (4) ein, so erhält man

$$dQ_K = U_A \cdot C_p (R - dR)/2R + U_A \cdot C_p (R + dR)/2R = U_A \cdot C_p \quad (17)$$

Das Kompensationsladungspaket $dQ_K$ verursacht eine dazu proportionale positive Aenderung der Spannung $U_{Cs}$, wie in dem entsprechenden Diagramm von Fig. 5 angezeigt ist.

Jeder Zyklus Z kann aus n Teilzyklen $Z_1$ und k Teilzyklen $Z_A$ bestehen; Fig. 5 zeigt die Verhältnisse für den Sonderfall n = k = 1. Im allgemeinen Fall hat sich auf dem Speicherkondensator 46 in jedem Zyklus Z die Ladung

$$Q_{Cs(Z)} = Q_{Cs(R)} + n \cdot dQ_M + k \cdot dQ_K \quad (18)$$

angesammelt. Am Beginn des folgenden Zyklus Z wird der Speicherkondensator 46 wieder auf die Restladung $Q_{Cs(R)}$ entladen. Die Differenzladung

$$dQ = n \cdot dQ_M + k \cdot dQ_K \quad (19)$$

wird auf den Integrationskondensator 48 übertragen, wodurch die Ausgangsspannung $U_A$ nachgeregelt wird. Die Schaltung arbeitet daher als Regelschleife, die die Ausgangsspannung $U_A$ auf einen Wert zu bringen sucht, bei welchem die Summe der k Kompensationsladungspakete $dQ_K$ gleich der Summe der n Messladungspakete $dQ_M$ ist. Wenn dieser Zustand erreicht ist, besteht Ladungsbalance im Speicherkondensator 46:

$$n \cdot dQ_M + k \cdot dQ_K = 0 \quad (20)$$

Durch Einsetzen der Werte für $dQ_M$ und $dQ_K$ aus den Gleichungen (13) und (17) erhält man hieraus die Uebertragungsfunktion der Schaltung:

$$U_A/U_1 = (n/k)(dR/R) \quad (21)$$

Das Verhältnis der analogen Ausgangsspannung $U_A$ zur Versorgungsspannung $U_1$ zeigt also im eingeschwungenen Zustand unmittelbar das gesuchte Widerstandsverhältnis an. In Fig. 5 ist angenommen, dass sich der eingeschwungene Zustand im Zeitpunkt $t_E$ am Ende des zweiten dargestellten Zyklus Z eingestellt hat. Von diesem Zeitpunkt an ändert sich die Spannung $U_A$ nicht mehr, solange die Widerstände 61 und 62 ihre Werte beibehalten. Bei einer Aenderung des Widerstandsverhältnisses dR/R geht die Ausgangsspannung $U_A$ mit einer durch die Kapazität $C_i$ des Integrationskondensators 48 bestimmten Zeitkonstante auf einen neuen Wert über.

Der Kapazitätswert des Kondensators 72 geht nicht in die Uebertragungsfunktion ein, er bestimmt jedoch die Grösse der Ladungspakete und somit die Dimensionierung der Kondensatoren 46 und 48. Desgleichen gehen die Kapazitätswerte der Kondensatoren 46 und 48, die Offsetspannungen der Operationsverstärker, die Versorgungsspannung der Schaltung und die Frequenz, mit der die Steuerschaltung getaktet wird, nicht in das Endergebnis ein.

Der Wert der Spannung $U_1$ wird nur durch den Arbeitsbereich der Schaltung begrenzt. Wählt man als Speisespannung $U_1$ die Stromversorgungsspannung der Schaltung, so erhält man gemäss Gleichung (21) ein Ausgangssignal, das der Stromversorgungsspannung proportional ist.

Wählt man als Speisespannung $U_1$ eine feste Referenzspannung $U_{ref}$, so erhält man gemäss der Gleichung (21) ein absolutes Ausgangssignal.

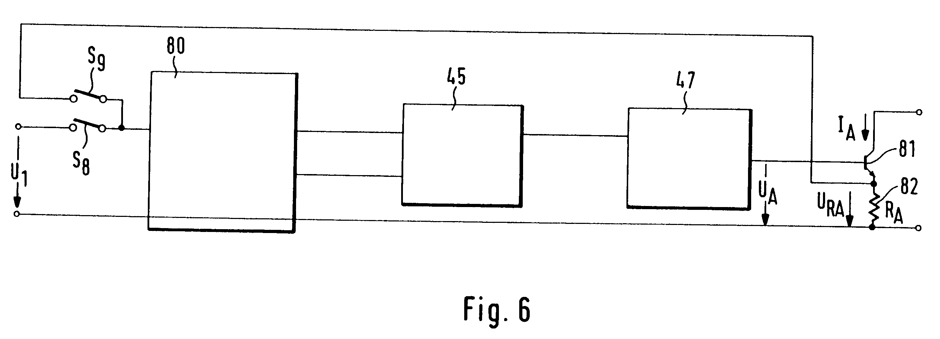

Fig. 6 zeigt eine Abwandlung der Schaltung von Fig. 4, die anstelle einer analogen Ausgangsspannung $U_A$ einen analogen Ausgangsstrom $I_A$ liefert. In Fig. 6 sind der Zwischenspeicher 45 und der Integrator 47 von Fig. 4 durch einen Schaltungsblock 80 dargestellt, der aus der Widerstands-Halbbrücke 60 und aus dem Funktionsblock 70 von Fig. 4 besteht.

Der Ausgang des Integrators 47 ist in Fig. 6 mit der Basis eines npn-Transistors 81 verbunden, der als Emitterfolger mit einem im Emitterkreis liegenden Widerstand 82 des Wertes den $R_A$ dient. Die zum Schalter $S_9$ führende Rückkopplung ist an den Emitter des Transistors 81 angeschlossen. die Ausgangsspannung $U_A$ des Integrators 47 lässt über den Kollektor-Emitter-Kreis des Transistors 81 den Ausgangsstrom $I_A$ fliessen. Somit wird bei dieser Schaltung die Spannung

$$U_{RA} = R_A \cdot I_A \quad (22)$$

auf den Eingang rückgekoppelt. Damit gilt für das Kompensationsladungspaket $dQ_K$ anstelle der Gleichung (17):

$$dQ_K = U_{RA} \cdot C_p \quad (23)$$

Demzufolge ergibt sich anstelle der Gleichung (20) die Uebertragungsfunktion

$$I_A/U_1 = [n/(k \cdot R_A)] \cdot (dR/R) \quad (24)$$

Die Schaltung von Fig. 6 eignet sich insbesondere für Messanordnungen, bei denen über eine einzige Zweidrahtleitung das Messwertsignal in Form eines Gleichstroms übertragen wird, der beispielsweise zwischen 4 mA und 20 mA veränderlich ist und in den auch der Versorgungsstrom für den Sensor und die Signalverarbeitungsschaltung eingeschlossen ist.

## Patentansprüche

1. Anordnung zur Verarbeitung von Sensorsignalen, die von einem Widerstandssensor (20) geliefert werden, der bei Speisung mit einem Versorgungssignal (V) als Reaktion auf die Einwirkung einer physikalischen Messgrösse einen die Abhängigkeit des elektrischen Widerstands von der Messgrösse darstellenden Messeffekt erzeugt, mit einer nach dem Prinzip des quantisierten Ladungstransports mittels Schalter-Kondensator-Strukturen arbeitenden Signalverarbeitungsschaltung (2), die eine Ladungsbalance durch gegensinnige Integration von vom Messeffekt abhängigen Messladungspaketen ($Q_M$) und von vom Messeffekt unabhängigen Kompensationsladungspaketen ($Q_K$) herstellt und ein dem Integrationsergebnis entsprechendes analoges Ausgangssignal $U_A$ liefert, und mit Beeinflussung der Speisung des Widerstandssensors (20) durch Rückkopplung eines in fester Beziehung zum analogen Ausgangssignal ($U_A$) stehenden Rückkopplungssignals zur Erzielung der Ladungsbalance.

2. Anordnung nach Anspruch 1, bei der das Rückkopplungssignal periodisch abwechselnd mit dem Versorgungssignal (V) den Widerstandssensor (20) speist.

3. Anordnung nach Anspruch 2, bei der die Schalter-Kondensator-Strukturen so gesteuert werden, dass sie die Messladungspakete ($Q_M$) bei Speisung des Widerstandssensors (20) mit dem Versorgungssignal (V) und die vom Messeffekt unabhängigen Kompensationsladungspakete ($Q_K$) bei Speisung des Widerstandssensors (20) mit dem Rückkopplungssignal erzeugen.

4. Anordnung nach einem der Ansprüche 1 bis 3, bei der das Versorgungssignal (V) eine Spannung ist und das analoge Ausgangssignal der Signalverarbeitungsschaltung (2) ebenfalls eine Spannung ist, die zugleich als Rückkopplungssignal dient.

5. Anordnung nach einem der Ansprüche 1 bis 3, bei der das Versorgungssignal (V) eine Spannung ist, das analoge Ausgangssignal der Signalverarbeitungsschaltung ein Strom ($I_A$) ist und das Rückkopplungssignal eine dem Strom proportionale Spannung ($U_{RA}$) ist.

6. Anordnung nach Anspruch 4 oder 5, bei der das Versorgungssignal (V) die Stromversorgungsspannung ($U_1$) ist.

7. Anordnung nach Anspruch 4 oder 5, bei der das Versorgungssignal eine feste Referenzspannung ist.

## Claims

1. An arrangement for processing sensor signals delivered by a resistance sensor (20) which, when fed with a supply signal (V) in response to the action of a measured physical quantity, produces a measuring effect representative of the dependence of the electrical resistance on the measured quantity, said arrangement comprising a signal-processing circuit (2) which operates on the principle of quantized charged transport by means of switch-capacitor structures, establishes a charge balance by opposite integration of measurement charge packets ($Q_M$) dependent on the measuring effect and compensation charge packets ($Q_K$) independent of the measuring effect, and delivers an analog output signal ($U_A$) corresponding to the result of the integration, with the feeding of the resistance sensor (20) being influenced by a feedback signal having a fixed relationship to the analog output signal ($U_A$) to achieve the charge balance.

2. An arrangement as claimed in claim 1 wherein the feedback signal feeds the resistance sensor (20) in periodic alternation with the supply signal (V).

3. An arrangement as claimed in claim 2 wherein the switch-capacitor structures are controlled to generate the measurement charge packets ($Q_M$) when the resistance sensor (20) is fed with the supply signal (V), and the measuring-effect-independent compensation charge packets ($Q_K$) when the resistance sensor (20) is fed with the feedback signal.

4. An arrangement as claimed in any one of claims 1 to 3 wherein the supply signal (V) is a voltage, and wherein the analog output signal of the signal-processing circuit (2) is also a voltage, which additionally serves as the feedback signal.

5. An arrangement as claimed in any one of claims 1 to 3 wherein the supply signal (V) is a voltage, the analog output signal of the signal-processing circuit is a current ($I_A$), and the feedback signal is a voltage ($U_{RA}$) proportional to the current.

6. An arrangement as claimed in claim 4 or 5 wherein the supply signal (V) is the power supply voltage ($U_1$).

7. An arrangement as claimed in claim 4 or 5 wherein the supply signal is a fixed reference voltage.


**Revendications**

1. Dispositif pour le traitement de signaux de détecteur fournis par un détecteur à résistance (20) qui, alimenté par un signal d'alimentation (V) et en réaction à l'effet d'une grandeur physique mesurée, génère un effet de mesure représentant la dépendance de la résistance électrique vis-à-vis de la grandeur mesurée, avec un circuit de traitement de signaux (2) fonctionnant selon le principe du transport de charge quantifié au moyen de structures de condensateurs commutés, qui établit un équilibre de charge par l'intégration en sens opposé de paquets de charge de mesure ($Q_M$) dépendants de l'effet de mesure et de paquets de charge de compensation ($Q_K$) indépendants de l'effet de mesure et fournit un signal de sortie analogique ($U_A$) correspondant au résultat de l'intégration, et avec l'influence sur l'alimentation du détecteur à résistance (20) par la rétroaction d'un signal de rétroaction en rapport constant avec le signal analogique de sortie ($U_A$) pour obtenir l'équilibre de charge.

2. Dispositif selon la revendication 1, selon lequel le signal de rétroaction alimente le détecteur à résistance (20) périodiquement et en alternance avec le signal d'alimentation (V).

3. Dispositif selon la revendication 2, selon lequel les structures de condensateurs commutés sont commandées de telle façon qu'elles génèrent les paquets de charge de mesure ($Q_M$) dans le cas d'une alimentation du détecteur à résistance (20) avec le signal d'alimentation (V) et les paquets de charge de compensation ($Q_K$) indépendants de l'effet de mesure dans le cas d'une alimentation du détecteur à résistance (20) avec le signal de rétroaction.

4. Dispositif selon l'une des revendications 1 à 3, selon lequel le signal d'alimentation (V) est une tension et le signal analogique de sortie du circuit de traitement de signaux (2) est également une tension qui sert en même temps de signal de rétroaction.

5. Dispositif selon l'une des revendications 1 à 3, selon lequel le signal d'alimentation (V) est une tension, le signal analogique de sortie du circuit de traitement de signaux un courant ($I_A$) et le signal de rétroaction une tension ($U_{RA}$) proportionnelle au courant.

6. Dispositif selon la revendication 4 ou 5, selon lequel le signal d'alimentation (V) est la tension d'alimen-

tation électrique ($U_1$).

7. Dispositif selon la revendication 4 ou 5, selon lequel le signal d'alimentation est une tension de référence fixe.

Fig.1

Fig. 2

Fig. 3

Fig. 4

EP 0 457 868 B1

Fig. 5

Fig. 6

EP 0 457 868 B1